# EUROPEAN PATENT SPECIFICATION

(11) **EP 2 565 169 B1**
(45) Date of publication and mention of the grant of the patent: **19.04.2017**
(21) Application number: 11861220.9
(22) Date of filing: 05.07.2011
(51) Int. Cl.: C03C 3/068

(54) **OPTICAL GLASS AND OPTICAL ELEMENT**
OPTISCHES GLAS UND OPTISCHES ELEMENT
VERRE OPTIQUE ET ÉLÉMENT OPTIQUE

(30) Priority: 11.03.2011 CN 201110059464; 13.06.2011 CN 201110157458
(43) Date of publication of application: 06.03.2013
(73) Proprietor: Cdgm Glass Co., Ltd., Chengdu, Sichuan 610100 (CN)
(72) Inventor: SUN, Wei, Chengdu Sichuan 610100 (CN); KUANG, Bo, Chengdu Sichuan 610100 (CN); LI, Xiaochun, Chengdu Sichuan 610100 (CN)
(74) Representative: Gulde & Partner
(86) International application number: PCT/CN2011/076847
(87) International publication number: WO 2012/122763

(56) References cited:
- EP-A1- 2 305 613
- CN-A- 101 282 915
- CN-A- 101 506 115
- JP-A- 53 144 913
- JP-A- 2007 269 584
- JP-A- 2009 167 075
- US-A1- 2008 287 280
- US-A1- 2010 113 248

## Description

### Field of the Invention

The invention relates to glass technical field, more specifically, an optical glass and optical element.

### Background of the Invention

The optical glass is used for manufacturing lens, prisms, reflectors, windows and the like in optical instruments or mechanical systems. By virtue of good transmission and high refractivity, the optical glass is widely used for manufacturing such optical instruments as glasses, cameras, digital cameras, telescopes, microscopes and lenses. Recently, as the digital cameras and the like are more and more popular, not only the demand for optical glass grows continuously, but also the requirements for performances of the optical glass are increased.

The optical glass with high refractivity and low dispersion is widely applied in modern imaging equipment. For example, the optical glass disclosed by the Chinese patent CN101360691Awith a refractivity of 1.5-1.65 and an Abbe number of 50-65 and the optical glass disclosed by the Chinese patent CN1704369Awith a refractivity of 1.85-1.90 and an Abbe number of 40-42.

Currently, the optical glass with a refractivity of 1.86-1.89 and an Abbe number of 38.5-42.0 has been widely studied. In order to meet the said optical performances, a lot of Ta₂O₅ is introduced into the components, for example, the optical glass with a high refractivity and low dispersion reported by the Chinese patent document with an application number of 200810304963.5 has the following components with certain mass percentages: 6wt% - 17wt% B₂O₃; 2wt% - 10wt% SiO₂; 25wt% (exclusive) - 45wt% (exclusive) La₂O₃; 5wt% - 25wt% Gd₂O₃; 19wt% (exclusive) - 27wt% (exclusive) Ta₂O₅; and 0.01wt% (exclusive) - 0.1wt% (exclusive) Sb₂O₃.

In the said reported optical glass, Ta₂O₅ is a necessary component to manufacture the optical glass with high refractivity and low dispersion and may effectively increase the refractivity of the optical glass. However, as a rare earth raw material, Ta₂O₅ is expensive and the said reported optical glass with a high content of Ta₂O₅ is thereby expansive. Therefore, it is necessary to design and manufacture the optical glass with a low content of Ta₂O₅, a refractivity of 1.86-1.89 and an Abbe number of 38.5-42.0.

In addition, the Chinese patent document with an application number of 200910001182.3 reported an optical glass with a refractivity above 1.9 and an Abbe number below 38, containing TiO₂ to reduce the Abbe number of the optical glass. However, TiO₂ has a great bearing on the glass coloration and will reduce the transmission of the optical glass. Since the requirement for transmission of the glass materials in optical systems and elements is higher and higher, if the glass transmission is poor, the transmission light quantity of exchange lenses will be reduced, and thereby the transmission of the optical glass shall be increased provided that the high refractivity and low dispersion requirements have been met.

Intermediate publication EP 2 305 613 A1 discloses optical glass compositions including TiO₂.

### Summary of the Invention

The problem to be solved in this invention is to provide an optical glass and optical element with a low content of Ta₂O₅, a refractivity of 1.86-1.89, an Abbe number of 38.5-42.0 and a wavelength below 380nm when the transmission reaches 70%.

In order to solve above technical problems, the invention provides an optical glass containing the following components:
2wt% - 10wt% SiO₂;
8wt% - 15wt% B₂O₃;
25wt% - 45wt% La₂O₃;
10wt% - 35wt% Gd₂O₃;
2wt% - 10wt% ZrO₂;
2.1wt% - 3.9wt% WO₃;
5wt% - 12.9wt% Ta₂O₅;
0wt% - 5wt% Y₂O₃+Yb₂O₃;
0wt% - 5wt% Nb₂O₅;
0wt% - 5wt% ZnO;
0wt% - 3wt% BaO;
0wt% - 3wt% SrO;
0wt% - 3wt% CaO;
but does not contain TiO₂.

Preferably, it contains:
6wt% - 9wt% SiO₂.
Preferably, it contains:
10wt% - 14wt% B₂O₃.

Preferably, it contains:
30wt% - 40wt% La₂O₃.
Preferably, it contains:
15wt% - 30wt% Gd₂O₃.
Preferably, it contains:
20wt% - 30wt% Gd₂O₃.
Preferably, it contains:
2.5wt% - 3.9wt% WO₃.
Preferably, it contains:
3wt% - 3.9wt% WO₃.

Preferably, it contains:
6wt% - 11 wt% Ta₂O₅.

Preferably, it contains:
7wt% - 10wt% Ta₂O₅.

Preferably, it contains:
1wt% - 4wt% Y₂O₃+Yb₂O₃.

Preferably, it contains:
1wt% - 4wt% Nb₂O₅.

Preferably, it contains:
1wt% - 5wt% ZnO.

Preferably, it has a refractivity of 1.86-1.89 and an Abbe number of 38.5-42.0.

Preferably, it has a wavelength below 380nm when the transmission reaches 70%.

The invention also provides an optical element made of the said optical glass in the said technical art.

The invention also provides an optical glass and optical element and the said optical glass contains 2wt% - 10wt% SiO₂; 8wt% - 15wt%B₂O₃; 25wt% - 45wt% La₂O₃; 10wt% - 35wt% Gd₂O₃; 2wt% - 10wt% ZrO₂; 2.1wt% - 3.9wt% WO₃; 5wt% - 12.9wt% Ta₂O₅; 0t% - 5wt% Y₂O₃+Yb₂O₃; 0wt% - 5wt% Nb₂O₅; 0wt% - 5wt% ZnO; 0wt% - 3wt% BaO; 0wt% - 3wt% SrO; and 0wt% - 3wt% CaO. The optical glass does not contain TiO₂. SiO₂ and B₂O₃ are backbone components of the optical glass in the invention, their addition may increase the glass stability and facilitate improvement of the chemical stability of the glass, and B₂O₃ may also reduce the high-temperature melt viscosity. La₂O₃ and Gd₂O₃ are the necessary components to obtain glass with a high refractivity and a low dispersion, while ZrO₂ may increase the viscosity, hardness and chemical stability of the optical glass and reduce the coefficient of thermal expansion of the glass.

In the invention, WO₃ is a component not only improving the resistance to loss of permeability of the optical glass but also distinctly improving the transmission of the glass compared with addition of TiO₂. Ta₂O₅ is the component giving high refractivity and low dispersion to the optical glass and meanwhile effectively increasing the glass stability. Compared with the existing techniques, the optical glass claimed in the invention reduces the content of Ta₂O₅ and meanwhile guarantees the optical parameters and performances of the said optical glass in the invention. The experiment results indicate that the optical glass with a refractivity of 1.86-1.89, an Abbe number of 38.5-42.0 and a wavelength below 380nm when the transmission reaches 70% provided in the invention meets the demands of modern imaging equipment and meanwhile reduces the cost.

### Detailed Description of the Embodiments

The technical arts in the embodiments of the invention are clearly and completely described below. It is obvious that the described embodiments are only partial embodiments of the invention instead of all embodiments. Based on the embodiments in the invention, all other embodiments obtained by ordinary technical personnel in the field without creative work belong to the protection scope of the invention.

The invention provides an optical glass, containing the following components:
2wt% - 10wt% SiO₂;
8wt% - 15wt% B₂O₃;
25wt% - 45wt% La₂O₃;
10wt% - 35wt% Gd₂O₃;
2wt% - 10wt% ZrO₂;
2.1wt% - 3.9wt% WO₃;
5wt% - 12.9wt% Ta₂O₅;
0wt% - 5wt% Y₂O₃+Yb₂O₃;
0wt% - 5wt% Nb₂O₅;
0wt% - 5wt% ZnO;
0wt% - 3wt% BaO;
0wt% - 3wt% SrO;
0wt% - 3wt% CaO;
but does not contain TiO₂.

SiO₂ is an important oxide component of the glass, forming irregular continuous network in the form of structural unit of silica tetrahedron [SiO₄], as the backbone to form the optical glass. SiO₂ has the function of maintaining the resistance to loss of permeability of glass. The content of SiO₂ is limited to 2wt%-10wt%, preferably 6wt% - 9wt% and more preferably 5wt% - 8wt%.

In the said components, B₂O₃ is an important oxide component of the optical glass, being effective to forming the optical glass network, reducing the coefficient of expansion, improving the thermal stability and chemical stability, increasing the refractivity and reducing the softening temperature and fusible temperature. The content of B₂O₃ is 8wt% - 15wt% and preferably 10wt% - 14wt%.

La₂O₃ is a necessary component to obtain the glass with high refractivity and low dispersion. The content of La₂O₃ is limited to 25wt% - 45wt%, preferably 30wt% - 40wt% and more preferably 32wt% - 38wt%. When the content of La₂O₃ is less than 25wt%, the refractivity of the optical glass will be reduced; while when the content of La₂O₃ is higher than 45wt%, the resistance to loss of permeability of the optical glass will be reduced.

Gd₂O₃ is an effective component to increase the refractivity and the Abbe number of the glass. The content of Gd₂O₃ is limited to 10wt% - 35wt%, preferably 15wt% - 30wt% and more preferably 20wt% - 30wt%. When the content of Gd₂O₃ is greater than 35wt%, the resistance to loss of permeability of the optical glass and the glass forming ability will be reduced.

ZrO₂ may increase the viscosity, hardness and chemical stability of the optical glass and reduce the coefficient of thermal expansion of the glass. When the content of ZrO₂ is less than 2%, above effects are not distinct; while when the content of ZrO₂ exceeds 8%, the glass will be difficult to be melted and easy to lose permeability, so the content of ZrO₂ is preferably 2-8wt%, more preferably 4-8wt% and most preferably 5wt% - 8wt%.

Ta₂O₅ is a component giving high refractivity and low dispersion to the optical glass and it may effectively increase the glass stability. Increase of the content of Ta₂O₅ will increase the glass cost, while reduction of the content of Ta₂O₅ will reduce the glass stability, therefore, the content of Ta₂O₅ is limited to 5wt%-12.9wt%, preferably 6wt% - 11wt% and more preferably 7wt% - 10wt%.

WO₃ is a component modifying the resistance to loss of permeability and adjusting the optical constant in the invention. In the invention, considering the cost, the addition of Ta₂O₅ is reduced; meanwhile, in order to reduce the dispersion, the glass forming ability is kept and the glass coloration performance is improved, and a proper amount of WO₃ is added when the addition of Ta₂O₅ is reduced.

In the invention, when the content of WO₃ is below 2.1wt%, it fails to realize the effect of reducing the dispersion, the improving effect of the resistance to loss of permeability of the optical glass is not distinct; when the content of WO₃ exceeds 3.9wt%, the optical constant required in the invention can't be reached and instead, the resistance to loss of permeability of the glass, the light transmittance of the short wavelength scope of the visible light scope and the glass transmittance will become poorer. Therefore, for good light transmittance of the optical glass within the short wavelength scope of the visible light scope, the content of WO₃ is limited to 2.1wt% - 3.9wt%, preferably 2.5wt% - 3.9wt% and more preferably 3wt% - 3.9wt% in the invention.

Y₂O₃ and Yb₂O₃ also play a role in increasing the refractivity of the optical glass and adjusting the optical constant and they shall be added only with a small amount in the invention; when the total content of Y₂O₃ and Yb₂O₃ exceeds 5wt%, the resistance to loss of permeability of the glass will become poorer. Therefore, the total content of Y₂O₃ and Yb₂O₃ is preferably 1wt% - 4wt%.

The optical glass with high refractivity and low dispersion is added with La₂O₃ as well as Gd₂O₃, Y₂O₃ or Yb₂O₃, which may effectively increase the resistance to loss of permeability of the glass and improve the glass forming ability when compared with that in case of only adding La₂O₃.

Nb₂O₅ is a component giving high refractivity to the glass and improving the resistance to loss of permeability of the glass. When the content of Nb₂O₅ is higher than 5wt%, the glass dispersion will be increased greatly and the Abbe number will be reduced. The content of Nb₂O₅ is limited to 0wt% - 5wt% and preferably 1wt%-4wt%.

In the invention, a proper amount of ZnO is added with the effects of fluxing and increasing the chemical stability and thermal stability of the glass. When the content of ZnO exceeds 5wt%, the optical constant of the glass is difficult to meet the requirement. Therefore, the content of ZnO is limited to 0wt% - 5wt%, preferably 1wt% - 5wt% and more preferably 2wt% - 4wt%.

Adding proper amounts of BaO, SrO and CaO in the invention may accelerate the melting, but when any content of BaO, SrO or CaO exceeds 3%, the glass melting process will become difficult, but the content of BaO, SrO or CaO is limited to 0wt% - 3wt% and preferably zero.

The optical glass in the invention has a refractivity of 1.86-1.89, an Abbe number of 38.5-42.0 and a wavelength below 380nm when the transmission reaches 70%. Since Ta₂O₅ is rare earth raw material that is high-priced, the optical glass claimed in the invention may reduce the content of Ta₂O₅ and meanwhile guarantee the optical constant and performances required in the invention at a low cost.

The performance parameters of the optical glass claimed in the invention are tested with the following methods.

The refractivity (nd) value is (-2°C/h) - (-6°C/h) annealing value. The refractivity and the Abbe number are tested in accordance with *Colourless Optical Glass Test Methods - Refractive Index and Coefficient of Dispersion* (GB/T 7962.1-1987).

The glass is fabricated into samples with a thickness of 10mm±0.1 mm, and the transmission of the tested glass up to 70% corresponds to the wavelength λ₇₀.

The invention also provides an optical element made of the said optical glass in the said art. The optical element has various characteristics of the said optical glass. The optical element in the invention has a refractivity of 1.86-1.89 and an Abbe number of 38.5-42.0 and it is applicable to digital cameras, digital videos, cameraphones and the like.

The optical glass preparation method claimed in the invention is not subject to any special limit and the optical glass is prepared with the well-known method by the technicians in the field. The raw materials are melted, defecated, homogenized, cooled, injected into the preheated metal mould and annealed to obtain the optical glass.

In order to further understand the art in the invention, combined with the specific embodiments in Table 1 and 2, the preferred embodiments of the invention are described below, but it shall be understood that these descriptions are only used for further describing the characteristics and advantages of the invention, instead of limits of the claims of the invention.

**Table 1 Percentage and Corresponding Performances of Optical Glass Components Provided in Embodiments 1-6**

| | | Embodiments | | | | | |
|---|---|---|---|---|---|---|---|
| | | 1 | 2 | 3 | 4 | 5 | 6 |
| | SiO₂ | 6.5 | 7.2 | 6.8 | 7.0 | 6.1 | 8.2 |
| | B₂O₃ | 10.6 | 10.8 | 11.5 | 11.6 | 9.3 | 13.8 |
| | La₂O₃ | 34.4 | 37.8 | 36.2 | 30.0 | 39.0 | 30.5 |
| | Gd₂O₃ | 24.0 | 22.2 | 21.1 | 29.3 | 12.0 | 26.5 |
| | ZrO₂ | 7.0 | 6.5 | 7.5 | 5.1 | 4.1 | 8.9 |
| Glass components (wt%) | WO₃ | 3.5 | 3.5 | 3.0 | 3.1 | 3.0 | 2.1 |
| | Ta₂O₅ | 12.9 | 12.0 | 8.3 | 6.9 | 12.5 | 10.0 |
| | Y₂O₃ | | | 2.6 | 3.0 | 5.0 | |
| | Yb₂O₃ | | | | 1.0 | | |
| | Nb₂O₅ | | | 3 | 2.0 | 4.0 | |
| | ZnO | 1.1 | | | | 5.0 | |
| | BaO | | | | | | |
| | SrO | | | | 1 | | |
| | CaO | | | | | | |
| | Total | 100 | 100 | 100 | 100 | 100 | 100 |
| | nd | 1.8837 | 1.8810 | 1.8851 | 1.8841 | 1.8900 | 1.8700 |
| | vd | 40.4 | 40.7 | 40.3 | 40.6 | 38.6 | 41.6 |
| | λ₇₀ (nm) | 378 | 377 | 378 | 375 | 379 | 377 |

**Table 2 Percentage and Corresponding Performances of Optical Glass Components Provided in Embodiment 7-12**

| | | Embodiments | | | | | |
|---|---|---|---|---|---|---|---|
| | | 7 | 8 | 9 | 10 | 11 | 12 |
| | SiO₂ | 9.5 | 6.2 | 5.8 | 7.7 | 5.4 | 8.7 |
| | B₂O₃ | 14.6 | 12.8 | 11.5 | 10.6 | 9.8 | 13.1 |
| | La₂O₃ | 36.7 | 35.8 | 31.1 | 34.0 | 41.0 | 33.9 |
| | Gd₂O₃ | 18.0 | 22.2 | 24.1 | 21.9 | 11.4 | 19.5 |
| | ZrO₂ | 2.0 | 6.9 | 5.5 | 6.1 | 4.3 | 7.4 |
| | WO₃ | 2.5 | 3.5 | 3.0 | 3.9 | 2.7 | 2.9 |
| | Ta₂O₅ | 5.9 | 9.8 | 8.9 | 7.9 | 12.2 | 10.3 |
| Glass components (wt%) | Y₂O₃ | 1.5 | | | | 4.2 | 3.5 |
| | Yb₂O₃ | 3.0 | | 3.3 | | 0.7 | |
| | Nb₂O₅ | 4.2 | 1.6 | 2.8 | 3.5 | 4.0 | |
| | ZnO | 2.1 | 1.2 | 3.0 | 4.4 | 2.8 | |
| | BaO | | | | | 1.5 | |
| | SrO | | | | | | |
| | CaO | | | 1 | | | 0.7 |
| | Total | 100 | 100 | 100 | 100 | 100 | 100 |
| | nd | 1.8690 | 1.8840 | 1.8775 | 1.8800 | 1.8900 | 1.8760 |
| | vd | 41.4 | 40.7 | 40.1 | 40.9 | 39.1 | 41.2 |
| | λ₇₀ | 376 | 376 | 375 | 377 | 377 | 378 |
| | | Embodiments | | | | | |
| | | 7 | 8 | 9 | 10 | 11 | 12 |
| | (nm) | | | | | | |

The optical glass provided in Embodiment 1-12 of the invention is prepared according to the following method:
The oxide, oxyhydrate, carbonate and nitrate raw materials corresponding to the components shown in Table 1-2 are weighed in proportion, fully mixed, added into the platinum crucible, melted at 1400-1450°C, defecated, homogenized and cooled to about 1300°C;
The melted glass cooled to below 1300°C is cast into the preheated metal mould;
The said melted glass cast into the preheated metal mould is pressure-formed at about 700-750°C;
The pressure-formed glass together with the metal mould is placed into the annealing furnace and gradually annealed for formation, and relevant parameters of the optical glass are tested.

The parameters of the optical glass, e.g. the refractivity and the Abbe number, provided in Embodiment 1-12 are shown in Table 1-2.

Seen from the said embodiments, the optical glass provided in the embodiments of the invention reduces the content of Ta₂O₅ so as to reduce the cost of the optical glass and meanwhile guarantees a refractivity of 1.86-1.89, an Abbe number of 38.5-42.0 and a wavelength below 380nm when the transmission reaches 70%.

## Claims

1. An optical glass, **characterized by** that it contains the following components:
2wt% - 10wt% SiO₂;
8wt% - 15wt% B₂O₃;
25wt% - 45wt% La₂O₃;
10wt% - 35wt% Gd₂O₃;
2wt%-10wt% ZrO₂;
2.1wt% - 3.9wt% WO₃;
5wt% - 12.9wt% Ta₂O₅;
0wt% - 5wt% Y₂O₃⁺Yb₂O₃;
0wt% - 5wt% Nb₂O₅;
0wt% - 5wt% ZnO;
0wt% - 3wt% BaO;
0wt% - 3wt% SrO;
0wt% - 3wt% CaO;
but does not contain TiO₂.

2. An optical glass, as set forth in Claim 1, is **characterized by** that it contains: 6wt% - 9wt% SiO₂.

3. An optical glass, as set forth in Claim 1, is **characterized by** that it contains: 10wt% - 14wt% B₂O₃.

4. An optical glass, as set forth in Claim 1, is **characterized by** that it contains: 30wt% - 40wt% La₂O₃.

5. An optical glass, as set forth in Claim 1, is **characterized by** that it contains: 15wt% - 30wt% Gd₂O₃.

6. An optical glass, as set forth in Claim 5, is **characterized by** that it contains: 20wt% - 30wt% Gd₂O₃.

7. An optical glass, as set forth in Claim 1, is **characterized by** that it contains: 2.5wt% - 3.9wt% WO₃.

8. An optical glass, as set forth in Claim 7, is **characterized by** that it contains: 3wt% - 3.9wt% WO₃.

9. An optical glass, as set forth in Claim 1, is **characterized by** that it contains: 6wt% - 11wt% Ta₂O₅.

10. An optical glass, as set forth in Claim 9, is **characterized by** that it contains: 7wt% - 10wt% Ta₂O₅.

11. An optical glass, as set forth in Claim 1, is **characterized by** that it contains: 1wt% - 4wt% Y₂O₃+Yb₂O₃.

12. An optical glass, as set forth in Claim 1, is **characterized by** that it contains: 1 wt% - 4wt% Nb₂O₅.

13. An optical glass, as set forth in Claim 1, is **characterized by** that it contains: 1 wt% - 5wt% ZnO.

14. An optical glass, as set forth in any of claims 1-13, is **characterized by** that it has
a refractivity of 1.86-1.89; and
an Abbe number of 38.5-42.0.

15. An optical glass, as set forth in any of claims 1-13, is **characterized by** that its wavelength is below 380nm when the transmission reaches 70%.

16. An optical element made of an optical glass as set forth in any of claims 1-15.

## Patentansprüche

1. Optisches Glas, **dadurch gekennzeichnet, dass** es die folgenden Komponenten enthält:
2 Gew.-% - 10 Gew.-% SiO₂;
8 Gew.-% - 15 Gew.-% B₂O₃;
25 Gew.-% - 45 Gew.-% La₂O₃;
10 Gew.-% - 35 Gew.-% Gd₂O₃;
2 Gew.-% - 10 Gew.-% ZrO₂;
2,1 Gew.-% - 3.9 Gew.-% WO₃;
5 Gew.-% - 12,9 Gew.-% Ta₂O₅;
0 Gew.-% - 5 Gew.-% Y₂O₃ + Yb₂O₃;
0 Gew.-% - 5 Gew.-% Nb₂O₅;
0 Gew.-% - 5 Gew.-% ZnO;
0 Gew.-% - 3 Gew.-% BaO;
0 Gew.-% - 3 Gew.-% SrO;
0 Gew.-% - 3 Gew.-% CaO;
jedoch kein TiO₂ enthält.

2. Optisches Glas wie in Anspruch 1 ausgeführt, **dadurch gekennzeichnet, dass** es 6 Gew.-% - 9 Gew.-% SiO₂ enthält.

3. Optisches Glas wie in Anspruch 1, ausgeführt, **dadurch gekennzeichnet, dass** es 10 Gew.-% - 14 Gew.-% B₂O₃ enthält.

4. Optisches Glas wie in Anspruch 1, ausgeführt, **dadurch gekennzeichnet, dass** es 30 Gew.-% - 40 Gew.-% La₂O₃ enthält.

5. Optisches Glas wie in Anspruch 1, ausgeführt, **dadurch gekennzeichnet, dass** es 15 Gew.-% - 30 Gew.-% Gd₂O₃ enthält.

6. Optisches Glas wie in Anspruch 5, ausgeführt, **dadurch gekennzeichnet, dass** es 20 Gew.-% - 30 Gew.-% Gd₂O₃ enthält.

7. Optisches Glas wie in Anspruch 1 ausgeführt, **dadurch gekennzeichnet, dass** es 2,5 Gew.-% - 3,9 Gew.% WO₃ enthält.

8. Optisches Glas wie in Anspruch 7 ausgeführt, **dadurch gekennzeichnet, dass** es 3 Gew.-% - 3,9 Gew.% WO₃ enthält.

9. Optisches Glas wie in Anspruch 1, ausgeführt, **dadurch gekennzeichnet, dass** es 6 Gew.-% - 11 Gew.-% Ta₂O₅ enthält.

10. Optisches Glas wie in Anspruch 9 ausgeführt, **dadurch gekennzeichnet, dass** es 7 Gew.-% - 10 Gew.-% Ta₂O₅ enthält.

11. Optisches Glas wie in Anspruch 1, ausgeführt, **dadurch gekennzeichnet, dass** es 1 Gew.-% - 4 Gew.-% Y₂O₃ + Yb₂O₃ enthält.

12. Optisches Glas wie in Anspruch 1, ausgeführt, **dadurch gekennzeichnet, dass** es 1 Gew.-% - 4 Gew.-% Nb₂O₅ enthält.

13. Optisches Glas wie in Anspruch 1, ausgeführt, **dadurch gekennzeichnet, dass** es 1 Gew.-% - 5 Gew.-% ZnO enthält.

14. Optisches Glas wie in einem der Ansprüche 1-13 ausgeführt, **dadurch gekennzeichnet, dass** es einen Brechungsindex von 1,86-1,89 aufweist; und eine Abbe-Zahl von 38,5-42,0.

15. Optisches Glas wie in einem der Ansprüche 1-13 ausgeführt, **dadurch gekennzeichnet, dass** seine Wellenlänge unter 380 nm liegt, wenn die Transmission 70% erreicht.

16. Optisches Element, das aus einem optischen Glas hergestellt ist, wie in einem der Ansprüche 1-15 ausgeführt.

## Revendications

1. Verre optique, **caractérisé en ce qu'**il contient les composants suivants :
entre 2 % en poids et 10 % en poids de SiO₂ ;
entre 8 % en poids et 15 % en poids de B₂O₃ ;
entre 25 % en poids et 45 % en poids de La₂O₃ ;
entre 10 % en poids et 35 % en poids de Gd₂O₃ ;
entre 2 % en poids et 10 % en poids de ZrO₂ ;
entre 2,1 % en poids et 3,9 % en poids de WO₃ ;
entre 5 % en poids et 12,9 % en poids de Ta₂O₅ ;
entre 0 % en poids et 5 % en poids de Y₂O₃ +Yb₂O₃ ;
entre 0 % en poids et 5 % en poids de Nb₂O₅ ;
entre 0 % en poids et 5 % en poids de ZnO ;
entre 0 % en poids et 3 % en poids de BaO ;
entre 0 % en poids et 3 % en poids de SrO ;
entre 0 % en poids et 3 % en poids de CaO ;
mais ne contient pas de TiO₂.

2. Verre optique selon la revendication 1, **caractérisé en ce qu'**il contient : entre 6 % en poids et 9 % en poids de SiO₂.

3. Verre optique selon la revendication 1, **caractérisé en ce qu'**il contient : entre 10 % en poids et 14 % en poids de B₂O₃.

4. Verre optique selon la revendication 1, **caractérisé en ce qu'**il contient : entre 30 % en poids et 40 % en poids de La₂O

5. Verre optique selon la revendication 1, **caractérisé en ce qu'**il contient : entre 15 % en poids et 30 % en poids de Gd₂O₃.

6. Verre optique selon la revendication 5, **caractérisé en ce qu'**il content : entre 20 % en poids et 30 % en poids de Gd₂O₃.

7. Verre optique selon la revendication 1, **caractérisé en ce qu'** il contient : entre 2,5 % en poids et 3,9 % en poids de WO₃.

8. Verre optique selon la revendication 7, **caractérisé en ce qu'**il content : entre 3 % en poids et 3,9 % en poids de WO₃.

9. Verre optique selon la revendication 1, **caractérisé en ce qu'**il content : entre 6 % en poids et 11 % en poids de Ta₂O₅.

10. Verre optique selon la revendication 9, **caractérisé en ce qu'**il content : entre 7 % en poids et 10 % en poids de Ta₂O₅.

11. Verre optique selon la revendication 1, **caractérisé en ce qu'**il contient : entre 1 % en poids et 4 % en poids de Y₂O₃ +Yb₂O₃.

12. Verre optique selon la revendication 1, **caractérisé en ce qu'**il contient : entre 1 % en poids et 4 % en poids de Nb₂O₅.

13. Verre optique selon la revendication 1, **caractérisé en ce qu'**il contient : entre 1 % en poids et 5 % en poids de ZnO.

14. Verre optique selon l'une quelconque des revendications 1 à 13, **caractérisé en ce qu'**il possède une réfringence comprise entre 1,86 et 1,89 ; et
un nombre d'Abbe compris entre 38,5 et 42,0.

15. Verre optique selon l'une quelconque des revendications 1 à 13, **caractérisé en ce que** ça longueur d'onde est inférieure à 380 nm lorsque la transmission atteint 70 %.

16. Élément optique fabriqué à partir d'un verre optique selon l'une quelconque des revendications 1 à 15.
